# FASCICULE DE BREVET EUROPEEN

(11) **EP 3 010 767 B1**
(45) Date de publication et mention de la délivrance du brevet: **22.03.2017**
(21) Numéro de dépôt: 14729940.8
(22) Date de dépôt: 16.06.2014
(51) Int. Cl.: B60R 25/021

(54) **ANTIVOL POUR COLONNE DE DIRECTION DE VÉHICULE AUTOMOBILE ET PROCÉDÉ D'ASSEMBLAGE ASSOCIÉ**
DIEBSTAHLSCHUTZ FÜR FAHRZEUGLENKSÄULE UND ZUGEHÖRIGES MONTAGEVERFAHREN
ANTITHEFT DEVICE FOR VEHICLE STEERING COLUMN AND ASSEMBLY METHOD THEREFOR

(30) Priorité: 19.06.2013 FR 1355758
(43) Date de publication de la demande: 27.04.2016
(73) Titulaire: U-Shin France, 94000 Créteil (FR)
(72) Inventeur: RENAUD, Jean-Pierre, F-58000 Nevers (FR); PERRIN, Christophe, F-58000 Nevers (FR)
(74) Mandataire: Gaillarde, Frédéric F. Ch.
(86) Numéro de dépôt international: PCT/EP2014/062599
(87) Numéro de publication internationale: WO 2014/202546

(56) Documents cités:
- EP-B1- 1 812 269
- FR-A1- 2 964 350

## Description

### DOMAINE TECHNIQUE

La présente invention concerne le domaine des antivols pour colonne de direction et trouve une application particulièrement avantageuse dans le domaine des véhicules automobiles.

### ETAT DE LATECHNIQUE

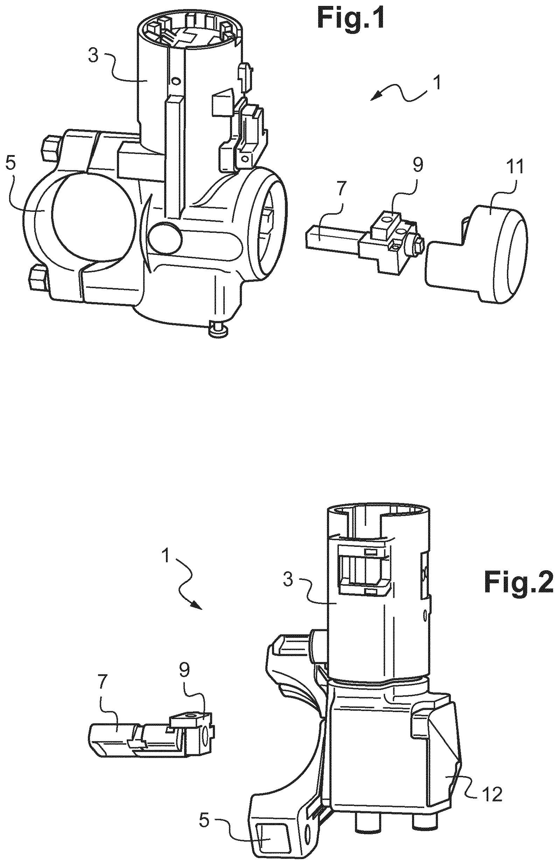

Les figures 1 et 2 représentent deux exemples d'antivols 1 de l'état de la technique comprenant chacun un corps d'antivol 3 comportant un collier de serrage 5 destiné à fixer l'antivol 1 sur la colonne de direction (non représentée). Les antivols 1 comprennent également un pêne 7 monté mobile dans le corps d'antivol 3, entre une position décondamnée dans laquelle il est destiné à être disposé à distance de la colonne de direction et une position condamnée dans laquelle il est destiné à bloquer la colonne. Le pêne 7 appartient à un module de verrouillage comprenant également un coulisseau 9. Le pêne 7 est entraîné par le coulisseau 9, lui-même commandé en déplacement par l'intermédiaire d'un verrou rotatif (non représenté) intégré dans l'antivol.

La figure 1 correspond à un mode de réalisation dans lequel l'assemblage se fait par le côté opposé à la colonne de direction et dans lequel une plaque de fermeture 11 en acier vient protéger l'accès au pêne 7. Cependant, dans ce mode de réalisation, la plaque de fermeture 11 est visible et accessible de sorte qu'il est relativement aisé pour un agresseur de retirer la plaque de fermeture 11, par exemple en faisant levier avec un tournevis.

La figure 2 correspond à un mode de réalisation dans lequel l'assemblage se fait du côté de la colonne de direction de sorte que l'extérieur du corps d'antivol 3 est formé d'un seul bloc et rend indétectable l'emplacement du pêne 7. Cependant, le corps d'antivol 3 est généralement réalisé avec un matériau ayant une résistance limitée de sorte qu'un agresseur pourrait également accéder au pêne, en utilisant par exemple un tournevis, pour fracturer le corps d'antivol 3.

### EXPOSE DE L'INVENTION

Il apparaît donc nécessaire de proposer un antivol pour une colonne de direction d'un véhicule automobile qui soit économique et peu ou pas sensible à une tentative d'effraction par un potentiel agresseur.

La présente invention a donc pour objet un antivol pour colonne de direction de véhicule automobile comportant un corps d'antivol et un module de verrouillage destiné à être reçu dans un logement borgne du corps d'antivol, ledit module de verrouillage comportant :
- un pêne monté mobile entre une position décondamnée dans laquelle il est destiné à être disposé à distance de la colonne de direction et une position condamnée dans laquelle il est destiné à bloquer ladite colonne de direction,
- un guide-pêne dans lequel le pêne est monté mobile et peut faire saillie en position condamnée,
- un élément de rappel élastique du pêne configuré pour solliciter le pêne en position condamnée,
caractérisé en ce qu'il comporte un capot de renforcement coiffant le guide-pêne pour s'interposer entre la paroi formant le fond du logement borgne et le guide-pêne, le capot de renforcement obturant une ouverture du guide-pêne en comprimant l'élément de rappel élastique du pêne, le capot de renforcement et le guide-pêne présentant des organes de pré-maintien complémentaires qui coopèrent avec l'élément de rappel élastique du pêne pour maintenir le capot de renforcement au guide-pêne.

L'action opposée des organes de pré-maintien et de l'élément de rappel élastique permet de maintenir provisoirement le capot de renforcement au guide-pêne, le temps de monter le module de verrouillage dans le corps d'antivol.

Le module de verrouillage forme alors un bloc facilement manipulable de sorte que l'étape d'assemblage du module de verrouillage dans l'antivol peut être réalisée à un moment et dans un lieu différents des autres étapes d'assemblage de l'antivol.

L'assemblage du capot de renforcement au guide-pêne peut être ainsi réalisée manuellement, l'opération ne provoquant ni déformation du guide-pêne, ni du capot de renforcement, comme cela aurait pu être le cas pour un dispositif de renforcement serti ou monté en force dans le guide-pêne. Le sertissage ou le montage en force aurait pu en effet déformer le guide-pêne dans des zones critiques de passage du pêne. En outre, le sertissage ou le montage en force nécessitent des étapes de procédé spécifiquement appareillées et donc couteuses.

Selon un premier mode de réalisation, le capot de renforcement et le guide-pêne présentent des organes de pré-maintien complémentaires coopérant par la succession d'un emboitement partiel axial du capot de renforcement et du guide-pêne dans la direction axiale de la poussée de l'élément de rappel élastique du pêne puis d'un mouvement de translation transversale, perpendiculaire à la direction axiale.

Selon un exemple de réalisation, l'organe de pré-maintien du capot de renforcement ou du guide-pêne présente au moins une ailette s'étendant axialement en direction de l'organe de pré-maintien complémentaire porté par le guide-pêne ou le capot de renforcement.

Selon un exemple de réalisation, un organe de pré-maintien présente deux ailettes, une première ailette coopérant avec une face externe de l'organe de pré-maintien complémentaire et une deuxième ailette coopérant avec une face interne de l'organe de pré-maintien complémentaire.

Selon un exemple de réalisation, l'organe de pré-maintien du capot de renforcement ou du guide-pêne comporte au moins un ergot s'étendant transversalement et s'insérant dans un orifice complémentaire ménagé dans une face latérale de l'organe de pré-maintien complémentaire porté par le capot de renforcement ou le guide-pêne.

Selon un exemple de réalisation, les organes de pré-maintien présentent deux ergots coopérant avec deux orifices complémentaires, un premier ergot s'étendant vers l'intérieur du guide-pêne et un deuxième ergot s'étendant vers l'extérieur du guide-pêne.

Selon un exemple de réalisation, la bordure de l'orifice complémentaire coopérant avec l'ergot est conformée en biais, la portion la plus étroite de l'orifice complémentaire étant celle qui coopère avec l'ergot. L'ergot est ainsi guidé par l'action de poussée de l'élément de rappel élastique du pêne vers la position assemblée, ce qui améliore la retenue de l'ergot dans l'orifice complémentaire.

Selon un deuxième mode de réalisation, le capot de renforcement présente une forme circulaire et le capot de renforcement et le guide-pêne présentent des organes de pré-maintien complémentaires coopérant par la succession d'un emboitement partiel axial du capot de renforcement et du guide-pêne dans la direction axiale de la poussée de l'élément de rappel élastique du pêne puis d'un mouvement de rotation. Le maintien en place de cet assemblage de type baïonnette, est assuré par la force de rappel de l'élément de rappel élastique du pêne qui permet de pré-maintenir le capot de renforcement au guide-pêne sans déformation, ni du guide-pêne, ni du capot de renforcement.

Selon un troisième mode de réalisation, le capot de renforcement et le guide-pêne présentent des organes de pré-maintien complémentaires coopérant par encliquetage du capot de renforcement dans le guide-pêne. L'assemblage du capot de renforcement au guide-pêne par encliquetage dont le maintien en place est assuré par la force de rappel de l'élément de rappel élastique du pêne permet de pré-maintenir le capot de renforcement au guide-pêne sans déformation du guide-pêne.

L'invention a aussi pour objet un procédé d'assemblage d'un antivol tel que décrit précédemment, dans lequel on pré-maintient le capot de renforcement au guide-pêne par un assemblage mécanique et on insère ledit module de verrouillage ainsi formé dans le logement borgne du corps d'antivol.

Un assemblage simple et provisoire permet donc le pré-maintien du capot de renforcement sur le guide-pêne. Une fois le module de verrouillage reçu dans le corps d'antivol, l'antivol présente ainsi un accès difficile voire impossible au module de verrouillage, notamment au pêne, par l'extérieur de la colonne de direction. En effet, le capot de renforcement est interposé entre le module de verrouillage et le logement borgne si bien que le module de verrouillage n'est accessible qu'après avoir retiré le capot de renforcement. En outre, il est possible de limiter l'épaisseur du corps d'antivol au niveau du logement borgne ce qui permet de limiter les coûts de fabrication du corps d'antivol.

Selon un exemple de réalisation, on assemble mécaniquement le capot de renforcement au guide-pêne par un emboitement partiel axial du capot de renforcement avec le guide-pêne dans la direction axiale de la poussée exercée par l'élément de rappel élastique du pêne suivi d'un mouvement de translation du capot de renforcement par rapport au guide-pêne dans une direction transversale, perpendiculaire à la direction axiale.

La configuration de l'antivol permet donc un assemblage rapide, simple et peu couteux du capot de renforcement.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
- la figure 1 représente une vue en perspective d'un premier mode de réalisation d'un antivol de l'état de la technique, en cours de montage,
- la figure 2 représente une vue en perspective d'un deuxième mode de réalisation d'un antivol de l'état de la technique, en cours de montage,
- la figure 3 représente une vue en perspective d'un antivol pour colonne de direction de véhicule automobile selon la présente invention, en cours de montage,
- la figure 4 représente un module de verrouillage de l'antivol de la figure 3 à l'état assemblé et en position condamnée,
- la figure 5 représente une vue partielle en coupe du module de verrouillage de la figure 4,
- la figure 6 représente le module de verrouillage de la figure 5 à l'état désassemblé,
- la figure 7 représente le module de verrouillage de la figure 6 à l'état assemblé, et
- la figure 8 représente le module de verrouillage de la figure 7 ayant pivoté d'environ 90°.
Sur ces figures, les éléments identiques portent les mêmes numéros de référence.

### DESCRIPTION DÉTAILLÉE

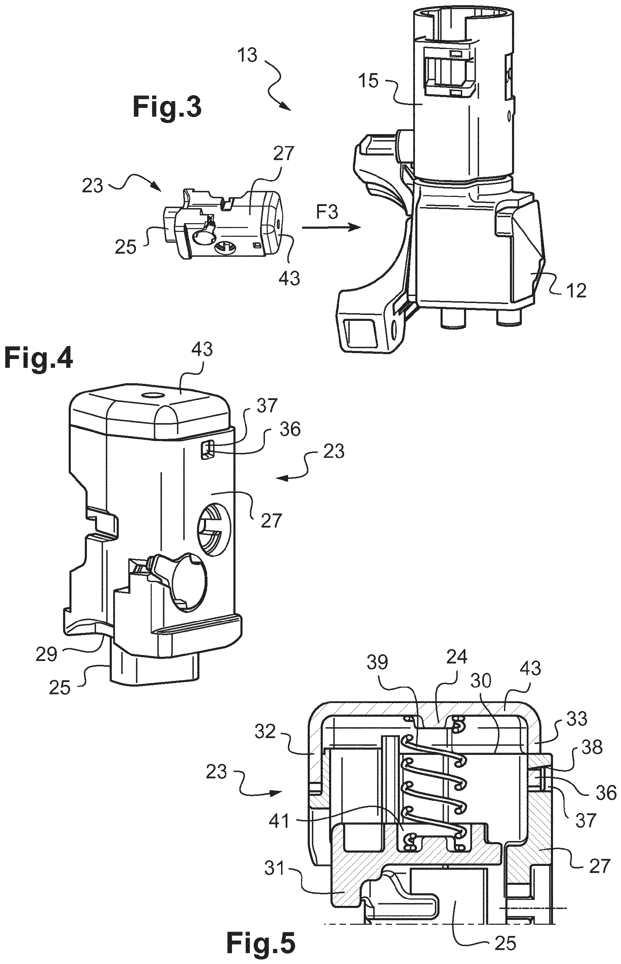

Les figures 3 à 8 illustrent un premier mode de réalisation d'un antivol 13 pour colonne de direction d'un véhicule automobile.

L'antivol 13 comprend un corps d'antivol 15 configuré pour s'assembler autour d'une colonne de direction. Le corps d'antivol 15 comprend un logement borgne destiné à recevoir un module de verrouillage 23 et dont on distingue la paroi formant le fond du logement borgne 12 sur la figure 3.

Le module de verrouillage 23 comprend un pêne 25 monté coulissant dans le corps d'antivol 15, via un guide-pêne 27 du module de verrouillage 23 (figure 3). Le pêne 25 est monté mobile entre une position décondamnée dans laquelle il est en position escamotée dans le guide-pêne 27, à distance de la colonne de direction et une position condamnée dans laquelle il est destiné à bloquer la colonne en faisant saillie d'une première ouverture 29 du guide-pêne 27 pour coopérer classiquement par emboîtement avec un élément de la colonne de direction. Le module de verrouillage 23 comprend en outre un coulisseau d'entrainement 31 du pêne 25 entraînant le pêne 25 en position condamnée ou décondamnée (figure 5). Le coulisseau d'entrainement 31 est commandé par la rotation d'un rotor de verrou généralement via une came de l'antivol non représentée.

Le module de verrouillage 23 comprend également un élément de rappel élastique 39 du pêne 25 en position condamnée. Ce élément de rappel élastique 39 est, par exemple, un ressort de type hélicoïdal, droit ou conique qui vient se positionner dans un logement 41 prévu du coulisseau d'entrainement 31. Le logement 41 comprend par exemple une excroissance coopérant avec une première extrémité d'un ressort 39 pour son maintien en position (figure 5).

Le module de verrouillage 23 comporte un capot de renforcement 43 coiffant le guide-pêne 27 pour s'interposer entre la paroi formant le fond du logement borgne 12 du corps d'antivol 15 et le guide-pêne 27. Le capot de renforcement 43 obture la deuxième ouverture 30 du guide-pêne 27 en comprimant l'élément de rappel élastique 39 du pêne 25.

Le capot de renforcement 43 peut présenter un plot de guidage 24 pour centrer l'élément de rappel élastique 39 du pêne 25, la deuxième extrémité de l'élément de rappel élastique 39 n'étant pas forcément fixé au capot de renforcement 43.

En outre, le capot de renforcement 43 et le guide-pêne 27 présentent des organes de pré-maintien complémentaires qui coopèrent avec l'élément de rappel élastique 39 du pêne 25 pour maintenir le capot de renforcement 43 au guide-pêne 27.

Le capot de renforcement 43 peut être réalisé dans un matériau métallique, notamment en acier pour augmenter sa robustesse. Le capot de renforcement 43 présente par exemple une épaisseur comprise entre 1,5 et 2 mm de manière à procurer une résistance suffisante tout en limitant l'épaisseur de l'antivol 13.

Selon un premier mode de réalisation, les organes de pré-maintien complémentaires du capot de renforcement 43 et du guide-pêne 27 coopèrent par la succession d'un emboitement partiel axial du capot de renforcement 43 et du guide-pêne 27 dans l'axe de la poussée A de l'élément de rappel élastique 39 du pêne 25 puis d'un mouvement de translation transversale T, perpendiculaire à la direction axiale A.

L'organe de pré-maintien du capot de renforcement 43 peut présenter au moins une ailette s'étendant axialement en direction de l'organe de pré-maintien complémentaire porté par le guide-pêne 27. A l'inverse, le guide-pêne 27 peut présenter au moins une ailette s'étendant axialement vers le capot de renforcement 43.

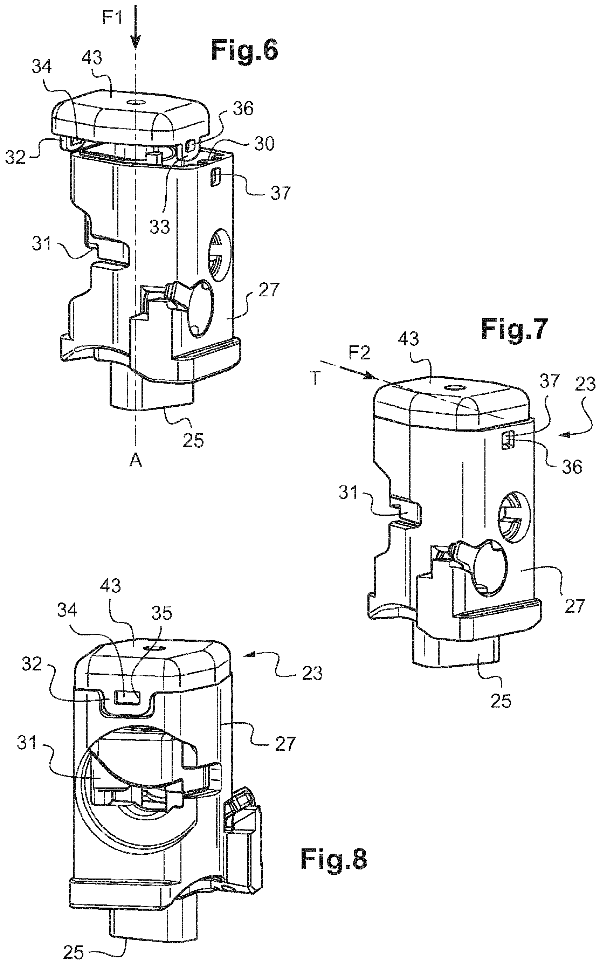

Dans l'exemple illustré, le capot de renforcement 43 présente deux ailettes 32, 33 s'étendant axialement vers la deuxième ouverture 30 du guide-pêne 27 (figure 6). Les ailettes 32, 33 sont par exemple agencées sensiblement à l'opposé l'une de l'autre.

L'organe de pré-maintien du capot de renforcement 43 ou du guide-pêne 27 peut comporter au moins un ergot s'étendant transversalement et s'insérant dans un orifice complémentaire ménagé dans une face latérale de l'organe de pré-maintien complémentaire porté par le capot de renforcement 43 ou le guide-pêne 27.

L'ergot, agencé sur le capot de renforcement 43 ou le guide-pêne 27 peut s'étendre vers l'intérieur du guide-pêne 27 ou vers l'extérieur. L'orifice complémentaire peut être borgne ou traversant. L'ergot 34, 36 est par exemple agencé sur une ailette 32, 33, par exemple au centre de celle-ci comme représenté sur les figures.

Selon un exemple de réalisation, la bordure 38 des orifices complémentaires 35, 37 coopérants avec l'ergot 34, 36 pour retenir le capot de renforcement 43 est conformée en biais (figure 5). La portion la plus étroite de l'orifice complémentaire 35, 37 est celle qui coopère avec l'ergot 34, 36 de sorte que l'ergot 34, 36 est guidé par l'action de poussée de l'élément de rappel élastique 39 vers la position assemblée. Ainsi, on améliore la retenue de ergot 34, 36 dans l'orifice complémentaire 35, 37.

Dans le cas particulier où les organes de pré-maintien présentent deux ergots 34, 36 coopérants avec deux orifices complémentaires 35, 37, plusieurs réalisations sont également envisageables.

Par exemple, un premier ergot 34 s'étend vers l'intérieur du guide-pêne 27 et un deuxième ergot 36 s'étend vers l'extérieur du guide-pêne 27. Les ergots 34, 36 pouvant être portés par le capot de renforcement 43 ou le guide-pêne 27.

Dans l'exemple illustré, un premier ergot 34 est agencé sur une première ailette 32 du capot de renforcement 43 et s'étend transversalement vers l'intérieur du guide-pêne 27. Le premier ergot 34 coopère avec un premier orifice complémentaire 35 ménagé dans une face latérale respective externe du guide-pêne 27.

Un deuxième ergot 36 est agencé sur une deuxième ailette 33 du capot de renforcement 43 et s'étend transversalement vers l'extérieur du guide-pêne 27. Le deuxième ergot 36 coopère avec un deuxième orifice complémentaire 37 ménagé dans une face latérale respective interne du guide-pêne 27.

On va maintenant décrire plus en détails les figures 6 à 8 illustrant le procédé d'assemblage de l'antivol 13.

Dans une première étape illustrée sur la figure 6, on pousse le capot de renforcement 43 vers le guide-pêne 27 pour emboiter partiellement le capot de renforcement 43 avec le guide-pêne 27 dans la direction axiale A de la direction de la poussée exercée par l'élément de rappel élastique du pêne (flèche F1).

Puis dans une deuxième étape représentée sur les figures 7 et 8, on pousse le capot de renforcement 43 dans une direction transversale T, perpendiculaire à la direction axiale A (flèche F2). Dans cette position assemblée, le capot de renforcement 43 comprime l'élément de rappel élastique 39 alors précontraint entre le capot de renforcement 43 et le coulisseau d'entraînement 31 comme représenté sur la figure 5. Les organes de pré-maintien complémentaires du capot de renforcement 43 et du guide-pêne 27 coopèrent alors avec l'élément de rappel élastique 39 du pêne 25 pour maintenir le capot de renforcement 43 au guide-pêne 27. Cet assemblage mécanique des organes de pré-maintien, obtenu par la conformation du guide-pêne 27 et du capot de renforcement 43 et leurs mouvements relatifs successifs, associée à l'action opposée de l'élément de rappel élastique du pêne 39, permet le pré-maintien du capot de renforcement 43 au guide-pêne 27, le temps de monter le module de verrouillage 23 dans le corps d'antivol 15.

Le module de verrouillage 23 forme alors un bloc facilement manipulable de sorte que l'étape d'assemblage du module de verrouillage 23 dans l'antivol 1 peut être réalisée à un moment et dans un lieu différents des autres étapes d'assemblage de l'antivol.

L'assemblage du capot de renforcement 43 au guide-pêne 27 peut être ainsi réalisée manuellement, l'opération ne provoquant ni déformation du guide-pêne 27, ni du capot de renforcement 43, comme cela aurait pu être le cas pour un dispositif de renforcement serti ou monté en force dans le guide-pêne. Le sertissage ou le montage en force aurait pu en effet déformer le guide-pêne dans des zones critiques de passage du pêne.

Puis dans une troisième étape illustrée en figure 3, on insère le module de verrouillage 23 ainsi formé dans le logement borgne du corps d'antivol 15 (flèche F3). Une fois monté dans le corps d'antivol 15, le capot de renforcement 43 vient en appui sur le fond du logement borgne du corps d'antivol 15 ce qui rend alors impossible tout déplacement du capot de renforcement 43.

Lorsque l'antivol 13 est assemblé, l'extérieur du corps d'antivol 15 apparaît comme un bloc massif qui rend indétectable l'emplacement exact du pêne 25. De plus, en cas d'agression, par exemple avec un tournevis, au niveau du corps d'antivol 15, si l'agresseur parvient à perforer le corps d'antivol en « Zamak® », il vient alors buter contre le capot de renforcement 43 en acier, beaucoup plus résistant. Le temps nécessaire pour accéder au pêne 25 est alors beaucoup plus long ce qui est dissuasif pour l'agresseur.

Selon un deuxième mode de réalisation non représenté de l'assemblage mécanique, le capot de renforcement et le guide-pêne présentent des organes de pré-maintien complémentaires coopérant par la succession d'un emboitement partiel axial du capot de renforcement et du guide-pêne dans la direction axiale de la poussée de l'élément de rappel élastique du pêne puis d'un mouvement de rotation.

Ceci est possible pour un capot de renforcement de forme circulaire. Le maintien en place de cet assemblage mécanique de type baïonnette, est assuré par la force de rappel de l'élément de rappel élastique du pêne qui permet de pré-maintenir le capot de renforcement au guide-pêne sans déformation, ni du guide-pêne, ni du capot de renforcement.

Selon un troisième mode de réalisation non représenté de l'assemblage mécanique, le capot de renforcement et le guide-pêne présentent des organes de pré-maintien complémentaires coopérant par encliquetage du capot de renforcement dans le guide-pêne. L'assemblage mécanique du capot de renforcement au guide-pêne par encliquetage dont le maintien en place est assuré par la force de rappel de l'élément de rappel élastique du pêne permet de pré-maintenir le capot de renforcement au guide-pêne sans déformation du guide-pêne.

## Revendications

1. Antivol (13) pour colonne de direction de véhicule automobile comportant un corps d'antivol (15) et un module de verrouillage (23) destiné à être reçu dans un logement borgne du corps d'antivol (15), ledit module de verrouillage (23) comportant :
- un pêne (25) monté mobile entre une position décondamnée dans laquelle il est destiné à être disposé à distance de la colonne de direction et une position condamnée dans laquelle il est destiné à bloquer ladite colonne de direction,
- un guide-pêne (27) dans lequel le pêne (25) est monté mobile et peut faire saillie en position condamnée,
- un élément de rappel élastique du pêne (39) configuré pour solliciter le pêne (25) en position condamnée,
**caractérisé en ce qu'**il comporte un capot de renforcement (43) coiffant le guide-pêne pour s'interposer entre la paroi formant le fond du logement borgne (12) et le guide-pêne (27), le capot de renforcement (43) obturant une ouverture (30) du guide-pêne (27) en comprimant l'élément de rappel élastique du pêne (39), le capot de renforcement (43) et le guide-pêne (27) présentant des organes de pré-maintien complémentaires qui coopèrent avec l'élément de rappel élastique du pêne (39) pour maintenir le capot de renforcement (43) au guide-pêne (27).

2. Antivol selon la revendication 1, **caractérisé en ce que** le capot de renforcement (43) et le guide-pêne (27) présentent des organes de pré-maintien complémentaires coopérant par la succession d'un emboitement partiel axial du capot de renforcement (43) et du guide-pêne (27) dans la direction axiale (A) de la poussée de l'élément de rappel élastique du pêne (39) puis d'un mouvement de translation transversale, perpendiculaire à la direction axiale (A).

3. Antivol selon la revendication 2, **caractérisé en ce que** l'organe de pré-maintien du capot de renforcement (43) ou du guide-pêne (27) présente au moins une ailette (32, 33) s'étendant axialement en direction de l'organe de pré-maintien complémentaire porté par le guide-pêne (27) ou le capot de renforcement (43).

4. Antivol selon la revendication 3, **caractérisé en ce qu'**un organe de pré-maintien présente deux ailettes (32, 33), une première ailette (32) coopérant avec une face externe de l'organe de pré-maintien complémentaire et une deuxième ailette (33) coopérant avec une face interne de l'organe de pré-maintien complémentaire.

5. Antivol selon l'une des revendications 2 à 4, **caractérisé en ce que** l'organe de pré-maintien du capot de renforcement (43) ou du guide-pêne (27) comporte au moins un ergot (34, 36) s'étendant transversalement et s'insérant dans un orifice complémentaire (35, 37) ménagé dans une face latérale de l'organe de pré-maintien complémentaire porté par le capot de renforcement (43) ou le guide-pêne (27).

6. Antivol selon la revendication 5, **caractérisé en ce que** les organes de pré-maintien présentent deux ergots (34, 36) coopérant avec deux orifices complémentaires (35, 37), un premier ergot (34) s'étendant vers l'intérieur du guide-pêne (27) et un deuxième ergot (36) s'étendant vers l'extérieur du guide-pêne (27).

7. Antivol selon l'une des revendications 5 ou 6, **caractérisé en ce que** la bordure (38) de l'orifice complémentaire (35, 37) coopérant avec l'ergot (34, 36) est conformée en biais, la portion la plus étroite de l'orifice complémentaire (35, 37) étant celle qui coopère avec l'ergot (34, 36).

8. Antivol selon la revendication 1, **caractérisé en ce que** le capot de renforcement (43) présente une forme circulaire et **en ce que** le capot de renforcement (43) et le guide- pêne (27) présentent des organes de pré-maintien complémentaires coopérant par la succession d'un emboitement partiel axial du capot de renforcement (43) et du guide-pêne (27) dans la direction axiale (A) de la poussée de l'élément de rappel élastique du pêne (39) puis d'un mouvement de rotation.

9. Antivol selon la revendication 1, **caractérisé en ce que** le capot de renforcement (43) et le guide-pêne (27) présentent des organes de pré-maintien complémentaires coopérant par encliquetage du capot de renforcement (43) dans le guide-pêne (27).

10. Procédé d'assemblage d'un antivol (13) selon l'une de revendications précédentes **caractérisé en ce qu'**on pré-maintient le capot de renforcement (43) au guide-pêne (27) par un assemblage mécanique et on insère ledit module de verrouillage (23) ainsi formé dans le logement borgne du corps d'antivol (15).

11. Procédé d'assemblage d'un antivol (13) selon la revendication 10, **caractérisé en ce qu'**on assemble mécaniquement le capot de renforcement (43) au guide-pêne (27) par un emboitement partiel axial du capot de renforcement (43) avec le guide-pêne (27) dans la direction axiale (A) de la poussée exercée par l'élément de rappel élastique du pêne (39) suivi d'un mouvement de translation du capot de renforcement (43) par rapport au guide-pêne (27) dans une direction transversale (T), perpendiculaire à la direction axiale (A).

## Patentansprüche

1. Diebstahlschutzvorrichtung (13) für Lenksäule eines Kraftfahrzeugs, die einen Diebstahlschutzvorrichtungskörper (15) und ein Verriegelungsmodul (23) umfasst, das dazu bestimmt ist, in einer Blindaufnahme des Diebstahlschutzvorrichtungskörpers (15) aufgenommen zu sein, wobei das Verriegelungsmodul (23) Folgendes umfasst:
- einen Riegel (25) der zwischen einer aufgesperrten Position, in der er dazu bestimmt ist, von der Lenksäule entfernt angeordnet zu sein, und einer abgesperrten Position, in der er dazu bestimmt ist, die Lenksäule zu blockieren, beweglich montiert ist,
- einen Führer-Riegel (27), in dem der Riegel (25) beweglich montiert ist und in abgesperrter Position vorstehen kann,
- ein elastisches Rückstellelement des Riegels (39), das ausgelegt ist, um den Riegel (25) in abgesperrte Position zu beanspruchen,
**dadurch gekennzeichnet, dass** sie eine Verstärkungskappe (43) umfasst, die auf dem Führer-Riegel sitzt, um sich zwischen die Wand, die den Grund der Blindaufnahme (12) bildet, und den Führer-Riegel (27) einzufügen, wobei die Verstärkungskappe (43) eine Öffnung (30) des Führers-Riegels (27) verschließt, indem das elastische Rückstellelement des Riegels (39) komprimiert wird, wobei die Verstärkungskappe (43) und der Führer-Riegel (27) komplementäre Organe zum Vorabhalten aufweisen, die mit dem elastischen Rückstellelement des Riegels (39) zusammenwirken, um die Verstärkungskappe (43) an dem Führer-Riegel (27) zu halten.

2. Diebstahlschutzvorrichtung nach Anspruch 1, **dadurch gekennzeichnet, dass** die Verstärkungskappe (43) und der Führer-Riegel (27) komplementäre Organe zum Vorabhalten aufweisen, die durch die Aufeinanderfolge eines teilweisen axialen Verschachtelns der Verstärkungskappe (43) und des Führers-Riegels (27) in die axiale Richtung (A) des Schubs des elastischen Rückstellelements des Riegels (39) zusammenwirken, gefolgt von einer Querverschiebungsbewegung senkrecht zu der axialen Richtung (A).

3. Diebstahlschutzvorrichtung nach Anspruch 2, **dadurch gekennzeichnet, dass** das Organ zum Vorabhalten der Verstärkungskappe (43) oder des Führers-Riegels (27) mindestens eine Rippe (32, 33) aufweist, die sich axial in Richtung des komplementären Organs zum Vorabhalten, das von dem Führer-Riegel (27) oder der Verstärkungskappe (43) getragen wird, erstreckt.

4. Diebstahlschutzvorrichtung nach Anspruch 3, **dadurch gekennzeichnet, dass** ein Organ zum Vorabhalten zwei Rippen (32, 33), eine erste Rippe (32), die mit einer äußeren Seite des komplementären Organs zum Vorabhalten zusammenwirkt, und eine zweite Rippe (33), die mit einer inneren Seite des komplementären Organs zum Vorabhalten zusammenwirkt, aufweist.

5. Diebstahlschutzvorrichtung nach einem der Ansprüche 2 bis 4, **dadurch gekennzeichnet, dass** das Organ zum Vorabhalten der Verstärkungskappe (43) oder des Führers-Riegels (27) mindestens einen Dorn (34, 36) umfasst, der sich quer erstreckt und sich in eine komplementäre Öffnung (35, 37), die in einer seitlichen Seite des komplementären Organs zum Vorabhalten angelegt ist, das von der Verstärkungskappe (43) oder dem Führer-Riegel (27) getragen wird, einfügt.

6. Diebstahlschutzvorrichtung nach Anspruch 5, **dadurch gekennzeichnet, dass** die Organe zum Vorabhalten zwei Dorne (34, 36) aufweisen, die mit zwei komplementären Öffnungen (35, 37) zusammenwirken, wobei sich ein erster Dorn (34) zu dem Inneren des Führers-Riegels (27) erstreckt und sich ein zweiter Dorn (36) zu dem Äußeren des Führers-Riegels (27) erstreckt.

7. Diebstahlschutzvorrichtung nach einem der Ansprüche 5 oder 6, **dadurch gekennzeichnet, dass** der Rand (38) der komplementären Öffnung (35, 37), die mit dem Dorn (34, 36) zusammenwirkt, schräg ausgestaltet ist, wobei der schmalste Abschnitt der komplementären Öffnung (35, 37) der ist, der mit dem Dorn (34, 36) zusammenwirkt

8. Diebstahlschutzvorrichtung nach Anspruch 1, **dadurch gekennzeichnet, dass** die Verstärkungskappe (43) eine Kreisform aufweist, und dass die Verstärkungskappe (43) und der Führer-Riegel (27) komplementäre Organe zum Vorabhalten aufweisen, die durch die Aufeinanderfolge einer teilweisen axialen Verschachtelung der Verstärkungskappe (43) und des Führers-Riegels (27) in die axiale Richtung (A) des Schubs des elastischen Rückstellmittels des Riegels (39) gefolgt von einer Rotationsbewegung zusammenwirken.

9. Diebstahlschutzvorrichtung nach Anspruch 1, **dadurch gekennzeichnet, dass** die Verstärkungskappe (43) und der Führer-Riegel (27) komplementäre Organe zum Vorabhalten aufweisen, die durch Einrasten der Verstärkungskappe (43) in den Führer-Riegel (27) zusammenwirken.

10. Verfahren zum Zusammenfügen einer Diebstahlschutzvorrichtung (13) nach einem der vorhergehenden Ansprüche, **dadurch gekennzeichnet, dass** man die Verstärkungskappe (43) an dem Führer-Riegel (27) durch eine mechanische Zusammenfügung vorab hält, und man das Verriegelungsmodul (23), das derart gebildet wird, in die Blindaufnahme des Diebstahlschutzkörpers (15) einfügt.

11. Verfahren zum Zusammenfügen einer Diebstahlschutzvorrichtung (13) nach Anspruch 10, **dadurch gekennzeichnet, dass** man die Verstärkungskappe (43) mechanisch mit dem Führer-Riegel (27) durch ein teilweises axiales Verschachteln der Verstärkungskappe (43) mit dem Führer-Riegel (27) in die axiale Richtung (A) des Schubs, der von dem elastischen Rückstellelement des Riegels (39) ausgeübt wird, gefolgt von einer Verschiebungsbewegung der Verstärkungskappe (43) in Bezug zu dem Führer-Riegel (27) in eine Querrichtung (T) senkrecht zu der axialen Richtung (A) zusammenfügt.

## Claims

1. An anti-theft device (13) for a steering column of a motor vehicle including an anti-theft body (15) and a locking module (23) intended to be received in a blind housing of the anti-theft body (15), said locking module (23) including:
- a bolt (25) movably mounted between a unlocked position in which it is intended to be disposed at a distance from the steering column and a locked position in which it is intended to block said steering column,
- a bolt guide (27) in which the bolt (25) is movably mounted and can protrude in the locked position,
- an elastic return element of the bolt (39) configured to urge the bolt (25) in the locked position,
**characterized in that** it includes a reinforcement cover (43) capping the guide bolt for interposing between the wall forming the bottom of the blind housing (12) and the bolt guide (27), the reinforcement cover (43) closing an opening (30) of the bolt guide (27) by compressing the elastic return element of the bolt (39), the reinforcement cover (43) and the bolt guide (27) having complementary pre-holding members which cooperate with the elastic return element of the bolt (39) for holding the reinforcement cover (43) to the bolt guide (27).

2. The anti-theft device according to claim 1, **characterized in that** the reinforcement cover (43) and the bolt guide (27) have complementary pre-holding members cooperating by the succession of an axial partial interlocking of the reinforcement cover (43) and the bolt guide (27) in the axial direction (A) of the thrust of the elastic return element of the bolt (39) then of a transversal translation movement, perpendicular to the axial direction (A).

3. The anti-theft device according to claim 2, **characterized in that** the pre-holding member of the reinforcement cover (43) or of the bolt guide (27) has at least one fin (32, 33) extending axially in the direction of the complementary pre-holding member carried by the bolt guide (27) or the reinforcement cover (43).

4. The anti-theft device according to claim 3, **characterized in that** a pre-holding member has two fins (32, 33), a first fin (32) cooperating with an outer face of the complementary pre-holding member and a second fin (33) cooperating with an inner face of the complementary pre-holding member.

5. The anti-theft device according to any of claims 2 to 4, **characterized in that** the pre-holding member of the reinforcement cover (43) or of the bolt guide (27) includes at least one pin (34, 36) extending transversely and inserting in a complementary port (35, 37) arranged in a lateral face of the complementary pre-holding member carried by the reinforcement cover (43) or the bolt guide (27).

6. The anti-theft device according to claim 5, **characterized in that** the pre-holding members have two pins (34, 36) cooperating with two complementary ports (35, 37), a first pin (34) extending towards the inside of the bolt guide (27) and a second pin (36) extending towards the outside of the bolt guide (27).

7. The anti-theft device according to any of claims 5 or 6, **characterized in that** the edge (38) of the complementary port (35, 37) cooperating with the pin (34, 36) is shaped at an angle, the narrowest portion of the complementary port (35, 37) being that which cooperates with the pin (34, 36).

8. The anti-theft device according to claim 1, **characterized in that** the reinforcement cover (43) has a circular shape and **in that** the reinforcement cover (43) and the bolt guide (27) have complementary pre-holding members cooperating by the succession of an axial partial interlocking of the reinforcement cover (43) and of the bolt guide (27) in the axial direction (A) of the thrust of the elastic return element of the bolt (39) then of a rotational movement.

9. The anti-theft device according to claim 1, **characterized in that** the reinforcement cover (43) and the bolt guide (27) have complementary pre-holding members cooperating by snapping of the reinforcement cover (43) in the bolt guide (27).

10. A method for assembling an anti-theft device (13) according to any of the preceding claims, **characterized in that** the reinforcement cover (43) is pre-held to the bolt guide (27) by a mechanical assembly and said locking module (23) formed accordingly is inserted in the blind housing of the anti-theft body (15).

11. The method for assembling an anti-theft device (13) according to claim 10, **characterized in that** the reinforcement cover (43) is mechanically assembled to the bolt guide (27) by an axial partial interlocking of the reinforcement cover (43) with the bolt guide (27) in the axial direction (A) of the thrust exerted by the elastic return element of the bolt (39) followed by a translational movement of the reinforcement cover (43) relative to the bolt guide (27) in a transverse direction (T), perpendicular to the axial direction (A).
